(19) Europäisches Patentamt
European Patent Office
Office européen des brevets

(11) **EP 2 919 455 A1**

(12) **EUROPEAN PATENT APPLICATION**

(43) Date of publication:
**16.09.2015 Bulletin 2015/38**

(51) Int Cl.:
*H04N 5/232* (2006.01)    *H04N 5/235* (2006.01)

(21) Application number: **15155344.3**

(22) Date of filing: **17.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.03.2014 JP 2014050525**

(71) Applicant: **Fujifilm Corporation
Minato-ku
Tokyo 106-8620 (JP)**

(72) Inventors:
• **Tanaka, Yasutake
Kanagawa, 258-8538 (JP)**
• **Ohta, Yasunori
Kanagawa, 258-8538 (JP)**

(74) Representative: **Klunker . Schmitt-Nilson . Hirsch
Patentanwälte
Destouchesstraße 68
80796 München (DE)**

(54) **Imaging system and imaging method**

(57)    In an imaging system and an imaging method which captures the image of an object with a selected imaging mode, an appropriate main exposure time is calculated with high accuracy in each imaging mode.

An imaging system 1 includes imaging means (imaging apparatus 10) for capturing the image of an object S, input receiving means (operating unit 104), and calculation means (exposure time calculation unit 110) for changing an exposure time calculation method for calculating an exposure time required for a main imaging operation according to an imaging mode input to the input receiving means and calculating the exposure time. The imaging means captures the image of the object S at the exposure time calculated by the calculation means.

FIG. 5

**EP 2 919 455 A1**

**Description**

**BACKGROUND OF THE INVENTION**

1. Field of the Invention

The present invention relates to an imaging system and an imaging method which capture an image of an object placed in a housing.

2. Description of the Related Art

In recent years, an imaging system which places an object in a housing and emits light to the object using a light source provided in the housing to capture the image of the object has been used in various fields. In the imaging system, an imaging mode is mainly used according to the type of object. For example, JP 3678397 B discloses an imaging system which detects chemiluminescent light or fluorescent light emitted from an object, light reflected from the object, or light transmitted through the object and generates an image.

Specifically, JP 3678397 B discloses an imaging system which stores a lookup table in which an imaging mode and a temporary exposure time (an exposure time for a temporary imaging operation) are associated with each other, acquires the temporary exposure time corresponding to the designated imaging mode with reference to the lookup table, and calculates a main exposure time (main imaging exposure time) suitable for a main imaging operation on the basis of a temporarily captured image signal which is obtained by the temporary imaging operation at the temporary exposure time.

JP 2013-68725 A discloses an imaging system which calculates the discoloration characteristics of chemiluminescence from an object on the basis of the result of a plurality of temporary imaging operations, calculates the main exposure time required to obtain the target density of an image under the discoloration characteristics, and performs a main imaging operation on the object at the main exposure time. According to this imaging system, it is possible to calculate the main exposure time considering the discoloration of chemiluminescent light.

**SUMMARY OF THE INVENTION**

However, in the imaging system according to the related art, the optical characteristics of chemiluminescent light, fluorescent light, reflected light, and transmitted light are not considered in a method for calculating the main exposure time and the accuracy of the calculation of the main exposure time is insufficient according to an imaging mode in some cases.

The invention has been made in view of the above-mentioned problems and an object of the invention is to provide an imaging system and an imaging method which selects an imaging mode, captures the image of an object, and can calculate an appropriate main exposure time with high accuracy, using each imaging mode.

In order to solve the above-mentioned problems, an imaging system according to an aspect of the invention includes: imaging means for capturing an image of an object; input receiving means for receiving an input of a mode for capturing the image of the object; and calculation means for calculating an exposure time that is required for a main imaging operation with an exposure time calculation method for calculating the exposure time, which calculation method is changed according to the imaging mode input to the input receiving means, and calculating the exposure time. The imaging means captures the image of the object at the exposure time calculated by the calculation means.

When the imaging mode is a first imaging mode for detecting chemiluminescent light, the calculation means may calculate the exposure time using an integral of a first attenuation function which is calculated in consideration of a temporary imaging result of the imaging means. When the imaging mode is a second imaging mode of detecting fluorescent light, the calculation means may calculate the exposure time using the integral of a second attenuation function which is calculated in consideration of the temporary imaging result of the imaging means or a constant function. In particular, the calculation means may approximate the aging characteristics of the chemiluminescent light with the first attenuation function and may approximate aging characteristics of the fluorescent light with the second attenuation function. In the specification, the term "integral of the constant function" includes the product of a constant of the constant function and the length of an integral interval.

The input receiving means may receive an input of the type of reagent used for imaging and the calculation means may change the exposure time calculation method according to at least the type of reagent.

The imaging system according to the aspect of the invention may further include display means for displaying the captured image. The input receiving means may receive an input of an area of interest in a temporarily captured image displayed on the display means. The calculation means may calculate the exposure time at which a density value of the area of interest input to the input receiving means is a target density value.

When the imaging mode is a third imaging mode of detecting light reflected from the object or a fourth imaging mode of detecting light transmitted through the object, the calculation means may set a predetermined value to the exposure time.

The input receiving means may receive an input of information about the exposure time calculation method. The calculation means may add a new element to a reference table which refers to the exposure time calculation method or change an preexisting element, on the basis of the information input to the input receiving means.

An imaging method according to another aspect of the invention includes: calculating the exposure time that is required for a main imaging operation with an exposure time calculation method for calculating the exposure time, which calculation method is changed according to a mode for capturing an image of an object, and; and capturing the image of the object at the calculated exposure time.

When the imaging mode is a first imaging mode of detecting chemiluminescent light, a temporary imaging operation may be performed and the exposure time may be calculated using the integral of a first attenuation function which is calculated in consideration of the result of the temporary imaging operation. When the imaging mode is a second imaging mode for detecting fluorescent light, the temporary imaging operation may be performed and the exposure time may be calculated using the integral of a second attenuation function, which is calculated considering the result of the temporary imaging operation, or a constant function. In particular, the aging characteristics of the chemiluminescent light may be approximated by the first attenuation function and the aging characteristics of the fluorescent light may be approximated by the second attenuation function.

The exposure time calculation method may be changed according to at least the type of reagent used for imaging.

An area of interest may be set in a temporarily captured image and the exposure time at which a density value of the area of interest is a target density value may be calculated.

When the imaging mode is a third imaging mode of detecting light reflected from the object or a fourth imaging mode of detecting light transmitted through the object, a predetermined value may be set to the exposure time.

The imaging system and the imaging method according to the invention change the exposure time calculation method in consideration of the aging characteristics of the light to be detected, according to the imaging mode. Therefore, it is possible to calculate the main exposure time using the exposure time calculation method corresponding to the imaging mode. As a result, in the imaging system and the imaging method which capture the image of the object with a selected imaging mode, it is possible to calculate an appropriate main exposure time with high accuracy in each imaging mode.

BRIEF DESCRIPTION OF THE DRAWINGS

Fig. 1 is a schematic perspective view illustrating an imaging system according to an embodiment.
Fig. 2 is a schematic cross-sectional view illustrating the internal structure of the imaging apparatus according to the embodiment;
Fig. 3 is a schematic block diagram illustrating the imaging system according to the embodiment.
Figs. 4A and 4B are graphs illustrating the aging characteristics of chemiluminescent light and fluorescent light.
Fig. 5 is a flowchart illustrating the flow of an imaging method according to the embodiment.

DESCRIPTION OF THE PREFERRED EMBODIMENTS

Hereinafter, embodiments of the invention will be described with reference to the drawings. However, the invention is not limited to the embodiments. For ease of viewing, for example, the scale of each component in the drawings is different from the actual scale.

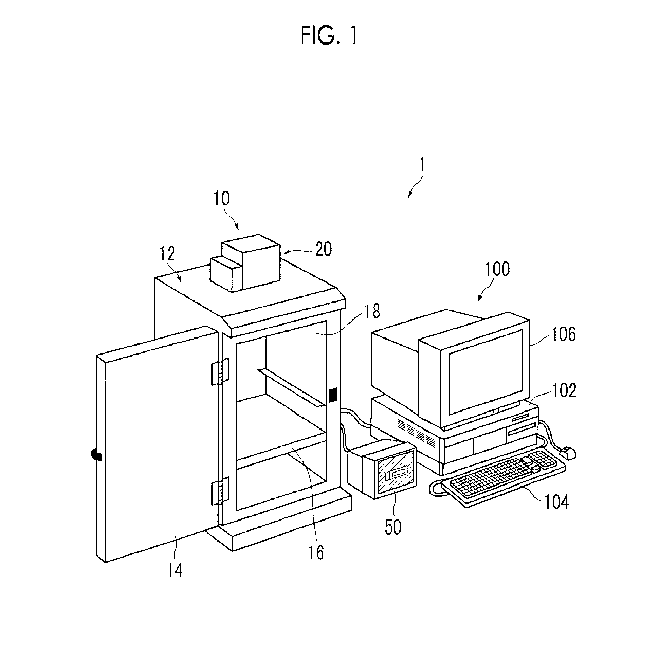

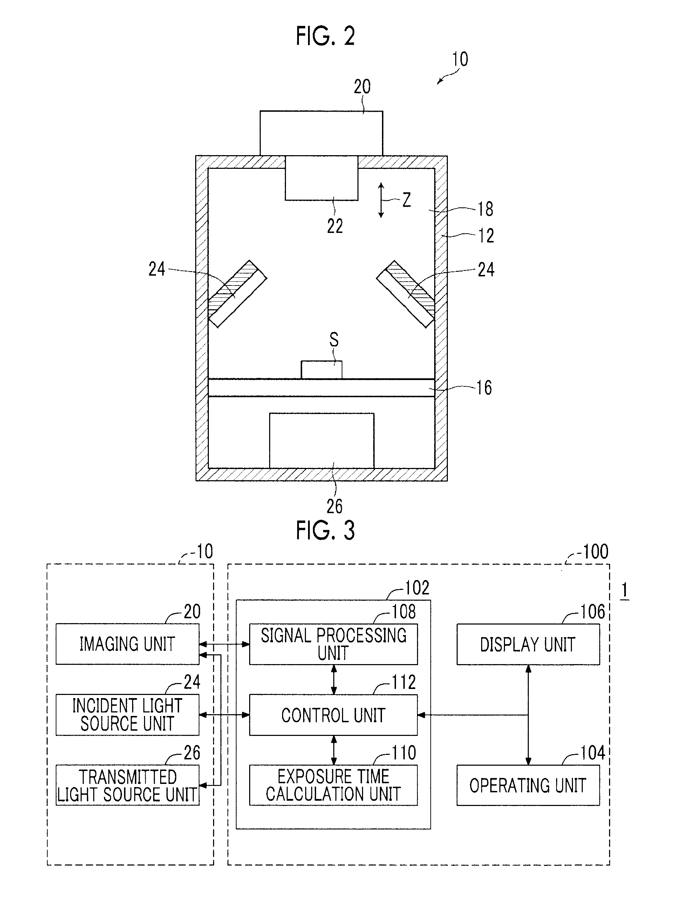

Fig. 1 is a schematic perspective view illustrating an imaging system according to an embodiment. Fig. 2 is a schematic cross-sectional view illustrating the internal structure of an imaging apparatus according to the embodiment. Fig. 3 is a schematic block diagram illustrating the imaging system according to the embodiment.

As illustrated in Figs. 1 and 2, an imaging system 1 according to this embodiment includes an imaging apparatus 10 and an imaging control device 100. The imaging apparatus 10 includes, for example, a housing 12 with a cover 14, a stage 16 on which an object S is placed, an imaging unit 20, a lens unit 22, an incident light source unit 24, a transmitted light source unit 26, and an object observing monitor 50. The imaging control device 100 is, for example, a personal computer and includes a control device body 102, an operating unit 104, and a display unit 106. The imaging apparatus 10 captures the image of the object S and transmits the acquired signal information to the imaging control device 100, under the control of the imaging control device 100. The imaging control device 100 converts the signal information into image data and stores the image data in a storage unit or displays the image data on the display unit 106.

The housing 12 includes a hollow portion 18 having a substantially rectangular parallelepiped shape and has the stage 16, on which the object S is placed, provided therein. The cover 14 illustrated in Fig. 1 is attached to the housing 12 so as to be openable and closable. The user opens the cover 14, places the object S on the stage 16, and closes the cover 14. In this way, the user can put the object S into the housing 12. The housing 12 forms a dark box in which external light is not incident into the hollow portion 18. The stage 16 is translucent in order to transmit light emitted from the transmitted light source unit 26.

The imaging unit 20 is fixed to the upper surface of the housing 12, includes an imaging element, such as a charge coupled device (CCD), detects light in the housing 12, and generates an electric signal. The generated electric signal is subjected to, for example, an amplification process and is then transmitted to a signal processing unit 108. The imaging unit 20 corresponds to imaging means of the invention. A cooling element is attached to the imaging unit 20 and cools the imaging element to prevent noise components from being inserted into the acquired signal information due to a dark current. The lens unit 22 is attached to the imaging unit 20.

The lens unit 22 includes, for example, a plurality of lenses. The lenses are provided so as to be movable in the direction of an arrow Z in order to focus the imaging unit on the object S. The lens unit 22 also includes optical elements, such as a diaphragm and an excitation light cut filter, and adjusts the amount of light to be detected or the wavelength of the light.

The incident light source unit 24 and the transmitted light source unit 26 each include, for example, an excitation light source for fluorescence photography and a white light source and are configured to switch the light sources under the control of the imaging control device 100, if necessary. For example, when an imaging operation of detecting fluorescent light from a fluorescently-labeled object is performed, excitation light emitted from the incident light source unit 24 or the transmitted light source unit 26 is radiated to the object S. For example, when an imaging operation of detecting light reflected from the object is performed, white light emitted from the incident light source unit 24 is radiated to the object S. For example, when an imaging operation of detecting light transmitted through the object is performed, white light emitted from the transmitted light source unit 26 is radiated to the object S.

The object observing monitor 50 displays the image of the object on the stage 16 captured by a miniature camera (not illustrated) which is provided in the upper part of the housing 12. Therefore, it is possible to check the position of the object S on the stage 16 or the height of the stage 16 and to adjust the position of the object or the height of the stage such that the image of the object S is appropriately captured.

The control device body 102 includes, for example, the signal processing unit 108, an exposure time calculation unit 110, and a control unit 112. The signal processing unit 108 generates image data on the basis of the electric signal generated by the imaging unit 20 and performs necessary signal processing (for example, a noise removal process or sharpness processing) for the image data. The exposure time calculation unit 110 corresponds to calculation means of the invention, changes an exposure time calculation method according to an imaging mode, and calculates a main exposure time (an exposure time required for a main imaging operation) with the changed exposure time calculation method. The exposure time calculation unit 110 will be described in detail below. The control unit 112 is, for example, a computer including, for example, a CPU and a ROM. The control unit 112 is connected to the imaging unit 20, the incident light source unit 24, the transmitted light source unit 26, the signal processing unit 108, the exposure time calculation unit 110, the operating unit 104, and the display unit 106 and controls the overall operation of each unit.

The display unit 106 corresponds to display means of the invention, is, for example, a display device, such as a CRT display or a liquid crystal display, and displays the image data generated by the signal processing unit 108. In addition, the display unit 106 also displays a setting screen for setting various settings to the imaging apparatus 10 or for giving various instructions to the imaging apparatus 10.

The operating unit 104 includes a user interface, such as a mouse or a keyboard. The operating unit 104 corresponds to input receiving means of the invention. The user operates the operating unit 104 to set various settings to the imaging apparatus 10 or to input various instructions to the imaging apparatus 10. For example, the user uses the operating unit 104 to set information, such as, the type of object, the content of the imaging mode, and the name of the reagent used, to the imaging system. The input information is stored in, for example, a storage unit (not illustrated) of the control unit 112.

The imaging system 1 according to this embodiment has the above-mentioned structure and can use the first to fourth imaging modes according to the type or purpose of the object. The first imaging mode detects chemiluminescent light emitted from the object. The second imaging mode detects fluorescent light emitted from the object. The third imaging mode detects illumination light reflected from the stage 16 (which includes illumination light reflected from the object; hereinafter, simply referred to as reflected light). The fourth imaging mode detects illumination light transmitted through the stage 16 (which includes illumination light transmitted through the stage 16 and the object S; hereinafter, simply referred to as transmitted light).

The first imaging mode uses the phenomenon (chemiluminescence) in which energy is emitted as light when the object particle excited by a chemical reaction returns to the ground state. Therefore, for example, it is possible to perform gene analysis, examination and study on the body tissues related to diseases and aging, and the degradation evaluation of an organic compound and a high molecular compound. For example, when an imaging target material in the object is contacted with a chemiluminescent substrate, it is labeled with a labeled material which causes chemiluminescence. Then, the chemiluminescent substrate can be contacted with the labeled material to generate chemiluminescent light. In addition, in the first imaging mode, no light is emitted from the incident light source unit 24 and the transmitted light source unit 26.

In the second imaging mode, excitation light is emitted from the incident light source unit 24 or the transmitted light source unit 26 and fluorescent light is detected from a fluorescent material labeling the imaging target material in the object. In the second imaging mode, an example of the object is a gel support including a DNA fragment which is fluorescently-labeled and is separated by electrophoresis. The use of the imaging system 1 makes it possible to capture the image of the distribution of the DNA fragments in the gel support and evaluate the distribution.

In the third imaging mode, for example, white light is emitted as illumination light from the incident light source unit 24 and light reflected from the object on which the illumination light is incident is detected. Therefore, a reflection copy of, for example, a photograph can be photoelectrically read to obtain a digital image. In the fourth imaging mode, for example, white light is emitted as illumination light from the transmitted light source unit 26, the illumination light passes through the object, and the transmitted light is detected. Therefore, a transparent copy of, for example, a film can be photoelectrically read to obtain a digital image.

However, when imaging is performed by the imaging system, the following method has been known as a method for determining the exposure time (main exposure time) of the main imaging operation: a method which calculates the exposure time capable of obtaining the target density value of the image captured by the main imaging operation on the basis of the density value of the image captured by a temporary imaging operation (JP 3678397 B). Here, the main imaging operation means an imaging operation which is performed in order to obtain an image for analyzing the object and the temporary imaging operation means an imaging operation which is performed in advance in order to obtain information for determining the exposure time of the main imaging operation. The temporary imaging operation acquires the temporary exposure time corresponding to the designated imaging mode with reference to a reference table in which the imaging mode and the temporary exposure time are associated with each other and performs imaging at the temporary exposure time. This method has been described in detail in JP 3678397 B.

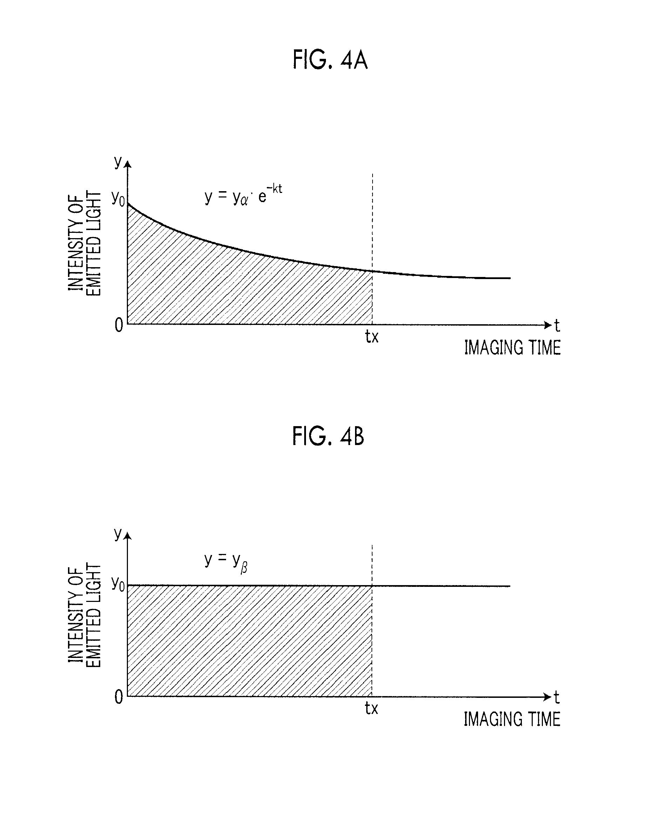

However, in the related art, the aging characteristics of each light component, which is a detection target, are not considered when the main exposure time is calculated. The aging characteristics mean properties indicating the relationship between the lapse of time and light intensity and are synonymous with the discoloration characteristics of discolored light. Figs. 4A and 4B are graphs illustrating the aging characteristics of chemiluminescent light and fluorescent light. Specifically, Fig. 4A is a graph illustrating the aging characteristics of the emission intensity of chemiluminescent light and Fig. 4B is a graph illustrating the aging characteristics of the emission intensity of fluorescent light. As illustrated in Fig. 4A, in many cases, the emission intensity of the chemiluminescent light is attenuated exponentially, that is, according to the following expression: $y = y_\alpha \cdot \exp(-k \cdot t)$ ($y_\alpha$ and k are positive constants). This is because the intensity of the chemiluminescent light is reduced as the density of a reactant in an excited state is reduced, with the progress of a chemical reaction. In the above-mentioned expression, $y_\alpha$ and k are determined by the material in which chemiluminescence occurs. The emission intensity of the fluorescent light is hardly attenuated and is ideally maintained at a constant value of $y = y_\beta$ ($y_\beta$ is a positive constant) as long as the excitation light is supplied. This is because the fluorescent light is generated, without involving the breakdown of a fluorescent material. Here, $y_\beta$ is determined by the fluorescent material. In some cases, the fluorescent light is attenuated depending on the type of material. In this case, the attenuation rate of emission intensity over time is less than that in the case of the chemiluminescent light. Therefore, in this case, the aging characteristics of the fluorescent light may be approximated by the following linear function: $y = -a \cdot t + y_\gamma$ (a and $y_\gamma$ are positive constants). That is, when the main exposure time is calculated, the aging characteristics (discoloration characteristics) of discolored light are preferably approximated by an attenuation function. In the invention, the attenuation function includes a decreasing exponential function and a linear function with a negative gradient.

As described above, when light intensity is attenuated, the method according to the related art calculates the main exposure time on the assumption that light intensity does not vary over time. Therefore, it is difficult to appropriately calculate the main exposure time. In JP 2013-68725 A, the aging characteristics of chemiluminescent light are considered, but the aging characteristics of fluorescent light are not considered.

In the third and fourth imaging modes, the value of the appropriate main exposure time depends on the intensity of illumination light and the reflectance or transmittance of the stage and is hardly changed depending on the object. This is because a target density value is rapidly obtained by the pixels of imaging means corresponding to positions other than the position where the object is placed on the stage 16. In this case, it is possible to calculate the value of the appropriate main exposure time before the image of the object is captured. Therefore, when the value of the appropriate main exposure time is calculated in advance, it is not necessary to perform the temporary imaging operation during the capture of the object. In the third and fourth imaging modes, the imaging time is unnecessarily increased by a value corresponding to the temporary imaging operation.

In the invention, calculation means for calculating the main exposure time changes an exposure time calculation method (for example, an approximate equation for the aging characteristics of light, the number of temporary imaging operations, and whether to use a preset value as the main exposure time) considering the aging characteristics of light to be detected, depending on the content of the imaging mode, and calculated the main exposure time with the changed exposure time calculation method. Specifically, in this embodiment, the exposure time calculation unit 110 (calculation means) includes the reference table, such as the following Table 1, which is referred to when, for example, a function is read on the basis of the imaging mode. In the reference table, the exposure time calculation method is associated with the imaging mode and the absence or presence of a reagent (or a reagent name).

For example, item No. 1 indicates that, when the imaging mode is the first imaging mode and the reagent name is not set, a method which approximates the aging characteristics of light with an attenuation function $F_0$, performs two temporary imaging operations, and calculates the main exposure time on the basis of the imaging result is used as the exposure time calculation method. For example, item No. 5 indicates that, when the imaging mode is the second imaging mode and the reagent name (fluorescent material name $B_1$) is set, a method which approximates the aging characteristics of light with an attenuation function $G_1$, performs one temporary imaging operation, and calculates the main exposure time on the basis of the imaging result is used as the exposure time calculation method. In this case, the number of temporary imaging operations is small since the fluorescent material name is set, the discoloration characteristics of the fluorescent material are known, that is, the gradient $a_1$ of the attenuation function $G_1$ is known, and it is not necessary to solve simultaneous equations. In order to calculate a more suitable main exposure time, the reference table may include an item indicating that the temporary imaging operation is performed two times even when the reagent name is set. In this case, for example, the main exposure time is calculated two times on the basis of the result of each temporary imaging operation and the main exposure times may be finally averaged. In addition, for example, item No. 8 indicates that, in the case of the third imaging mode, a method which uses a preset value $T_{m3}$ as the main exposure time may be used as the exposure time calculation method. The item "reagent name" can be changed to an item "type of reagent" which is a superordinate concept of the item "reagent name", considering a case in which materials with similar discoloration characteristics are arranged.

[Table 1]

| No. | Imaging mode | Reagent name | Function | Number of temporary imaging operations | Predetermined main exposure time |
|---|---|---|---|---|---|
| 1 | First imaging mode (chemiluminescent light) | - | $F_0$: y = $y_\alpha \cdot$exp(-kt) | 2 | - |
| 2 | | $A_1$ | $F_1$: y = $y_\alpha \cdot$exp(-$k_1$t) | 1 | - |
| 3 | | $A_2$ | $F_2$: y = $y_\alpha \cdot$exp(-$k_2$t) | 1 | - |
| 4 | Second imaging mode (fluorescent light) | - | $G_0$: y = -a$\cdot$t+$y_\gamma$ | 2 | - |
| 5 | | $B_1$ | $G_1$: y = -$a_1 \cdot$t+$y_\gamma$ | 1 | - |
| 6 | | $B_2$ | $G_2$: y = -$a_2 \cdot$t+$y_\gamma$ | 1 | - |
| 7 | | - | $G_3$: y = $y_\gamma$ | 1 | - |
| 8 | Third imaging mode (reflected light) | - | - | 0 | $T_{m3}$ |
| 9 | Fourth imaging mode (transmitted light) | - | - | 0 | $T_{m4}$ |

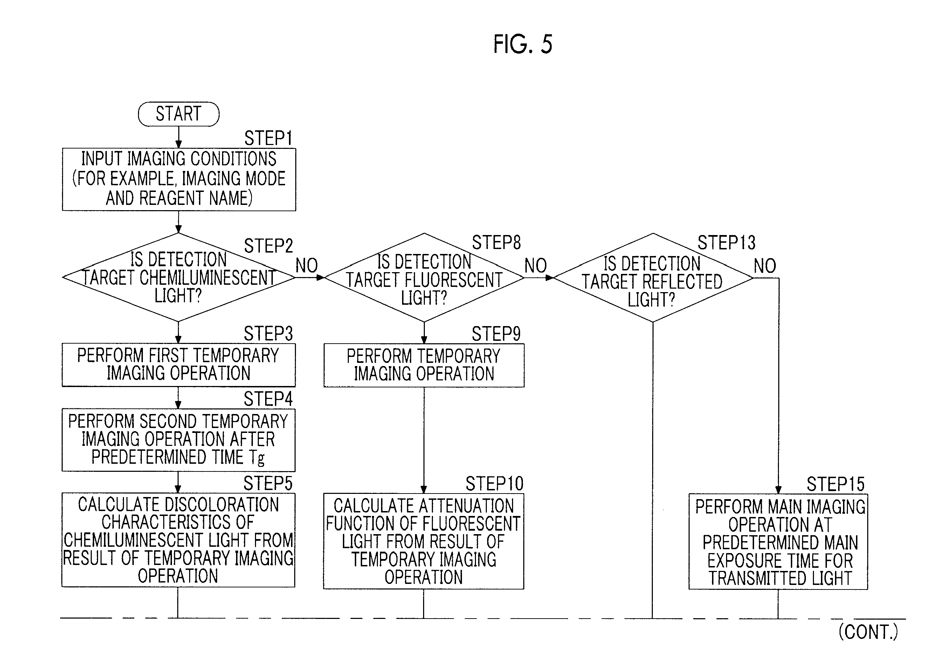

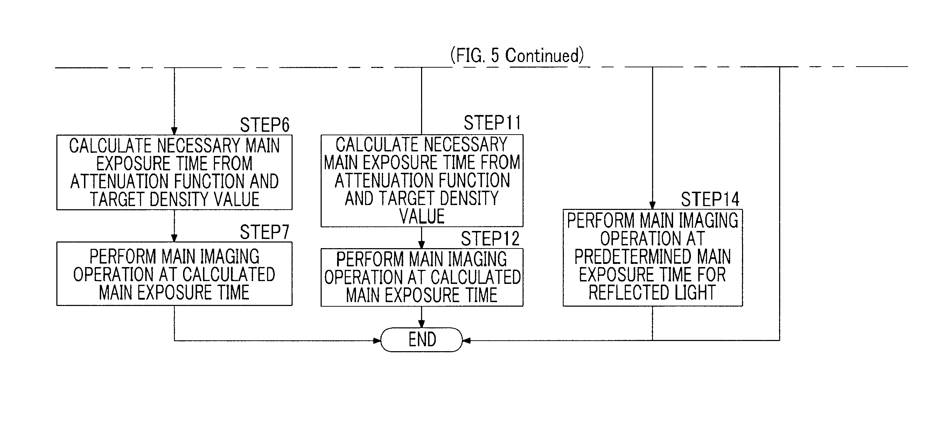

Next, the flow of an imaging method according to this embodiment will be described. Fig. 5 is a flowchart illustrating the flow of the imaging method according to the embodiment. First, the user selects the imaging mode for capturing the image of the object and uses the operating unit 104 to input information about the imaging mode to the imaging system 1 (STEP1). In addition, the user inputs the name or type of the reagent used for imaging, if necessary. For example, the reagent used for imaging is a material (for example, a chemiluminescent substrate) related to chemiluminescence when chemiluminescent light is detected and is a fluorescent material when fluorescent light is detected.

The control unit 112 which has acquired the information of the imaging mode determines which of the first to fourth imaging modes corresponds to the selected imaging mode (STEP2) and changes the subsequent step depending on the determination result. Specifically, when the selected imaging mode is the first imaging mode (that is, the detection target is chemiluminescent light), the control unit 112 proceeds to STEP3. When the imaging mode is the second imaging mode (that is, the detection target is fluorescent light), the control unit 112 proceeds to STEP9. When the imaging mode is the third imaging mode (that is, the detection target is reflected light), the control unit 112 proceeds to STEP14. When the imaging mode is the fourth imaging mode (that is, the detection target is transmitted light), the control unit 112 proceeds to STEP 15.

For example, when the designated imaging mode is the first imaging mode and the reagent name is not set, the exposure time calculation unit 110 which has received the information of the imaging conditions selects item No. 1 in the reference table and transmits an instruction to perform the temporary imaging operation two times as a response to the control unit 112. When receiving the instruction from the control unit 112, the imaging apparatus 10 performs a first temporary imaging operation (STEP3) and performs a second temporary imaging operation after a predetermined period of time Tg. The temporary imaging conditions (for example, the number of imaging operations, the exposure time, a binning number, the light source used, the absence or presence of a fluorescence filter, and the type of correction) are determined on the basis of, for example, the imaging mode and the user's designation, according to another reference table. In this case, when the temporary imaging conditions are different from the content of the reference table of Table 1, the temporary imaging conditions may be set such that priority is given to any one of them in principle or the user may select the content of the temporary imaging operation to be performed each time the temporary imaging operation is performed. In the temporary imaging operation, the binning number is preferably greater than that during the main imaging operation, in order to detect light with high sensitivity and to reduce the imaging time.

The exposure time calculation unit 110 calculates an attenuation function for approximating the aging characteristics of the chemiluminescent light emitted from the object, on the basis of the density values of the images obtained by the first and second temporary imaging operations (STEP5). As the density value of interest, for example, the following value can be used: the maximum density value of the image; the density value of a representative pixel; the average density value of a plurality of pixels; or the most frequent density value of the image. In addition, the maximum value, representative value, mean, or mode of the area of interest in the image obtained by the temporary imaging operation may be used as the density value. In this way, it is possible to calculate the appropriate main exposure time for, particularly, the density value of the area of interest. The user may use the operating unit 104 to designate the area of interest, while viewing, for example, the temporarily-captured image displayed on the display unit 106, or an important area of the object may be automatically detected as the area of interest.

First, since the density value obtained by the temporary imaging operation is an integral value within the temporary imaging time, it is necessary to convert the density value into a density value per unit time. At that time, it is necessary to consider the difference between the binning numbers in the main imaging operation and the temporary imaging operation. For example, when the temporary imaging time (about 100 ms) of each of the first and second temporary imaging operations is $T_p$, the density values obtained by the first and second temporary imaging operations are $Q_{p1}$ and $Q_{p2}$, respectively, and the binning numbers in the main imaging operation and the temporary imaging operation are $B_m$ and $B_p$, respectively, the density values $Q_{m1}$ and $Q_{m2}$ of the main imaging operation per unit time corresponding to the density values $Q_{p1}$ and $Q_{p2}$ obtained by the temporary imaging operations are obtained by the following Expressions 1 and 2:

$$[\text{Expression 1}]$$

$$Q_{m1} = \frac{Q_{p1}}{T_p} \frac{B_m^2}{B_p^2} ;$$

and

$$[\text{Expression 2}]$$

$$Q_{m2} = \frac{Q_{p2}}{T_p} \frac{B_m^2}{B_p^2}$$

When the density values $Q_{m1}$ and $Q_{m2}$ of the main imaging operation per unit time is calculated, the exposure time calculation unit 110 approximates the aging characteristics of the chemiluminescent light with the attenuation function $y = y_\alpha \cdot \exp(-k \cdot t)$ and calculates an attenuation coefficient k of the attenuation function using the following Expression 3:

[Expression 3]

$$k = \frac{\ln(Q_{m1}) - \ln(Q_{m2})}{T_g}$$

In the above-mentioned expression, ln is a natural logarithm. The initial value $y_\alpha$ of the attenuation function is determined by time. For example, when the time when the second temporary imaging operation is performed is used as the reference time, the density value $Q_{m2}$ of the main imaging operation per unit time can be set as the initial value $y_\alpha$. In this way, the attenuation function indicating the aging characteristics of chemiluminescent light based on the time when the second temporary imaging operation is performed is obtained (STEP5).

Then, the exposure time calculation unit 110 calculates the main exposure time capable of obtaining the target density value $Q_f$ of the image captured by the main imaging operation, using the obtained attenuation function (STEP6). The value designated by the user or a preset value may be set as the target density value. When the main exposure time is $T_{m1}$, $T_{m1}$ is obtained by the Expression 5 from the relationship with Expression 4:

[Expression 4]

$$Q_f = \int_0^{T_{m1}} Q_{m2} \cdot \exp(-k \cdot t) dt \; ;$$

and

[Expression 5]

$$T_{m1} = -\frac{\ln\left(1 - \dfrac{Q_f}{Q_{m2}} \cdot k\right)}{k}$$

When the main exposure time $T_{m1}$ is calculated, the value in parentheses in Expression 5 needs to be positive (condition 1). When the upper limit of the main exposure time is set, the main exposure time needs to be set to a value equal to or less than the upper limit (condition 2). When the two conditions are not satisfied, it is necessary to reduce the target density value $Q_f$. If necessary, the target density value $Q_f$ may increase within the range in which the two conditions are satisfied.

Then, the imaging apparatus 10 performs the main imaging operation, using the main exposure time $T_{m1}$ obtained by Expression 5 and the binning number $B_m$ (STEP7). In this way, an image with the target density value $Q_f$ is obtained.

When the designated imaging mode is the second imaging mode and the fluorescent material name $B_1$ is set, the exposure time calculation unit 110 which has received the information of the imaging conditions selects item No. 5 in the reference table and transmits an instruction to perform the temporary imaging operation once as a response to the control unit 112. When receiving the instruction from the control unit 112, the imaging apparatus 10 performs the temporary imaging operation once (STEP9). In this case, when the density value obtained by the temporary imaging operation is $Q_{p3}$, the density value $Q_{m3}$ of the main imaging operation per unit time corresponding to the density value $Q_{p3}$ obtained by the temporary imaging operation is obtained by the following Expression 6, similarly to the above description:

[Expression 6]

$$Q_{m3} = \frac{Q_{p3}}{T_p} \frac{B_m^2}{B_p^2}$$

When the density value $Q_{m3}$ of the main imaging operation per unit time is calculated, the exposure time calculation unit 110 approximates the aging characteristics of fluorescent light with an attenuation function $y = -a_1 \cdot t + y_\gamma$ with an attenuation rate lower than that of the attenuation function in the first imaging mode and calculates an unknown constant $y_\gamma$ of the attenuation function using the following Expression 7:

[Expression 7]

$$y_\gamma = Q_{m3} + a_1 \cdot \tau_3$$

Here, $\tau_3$ is the time when the temporary imaging operation is performed. The initial value $y_\gamma$ of the attenuation function is determined by time. For example, when the time when the temporary imaging operation is performed is used as the reference time ($\tau_3 = 0$), the density value $Q_{m3}$ of the main imaging operation per unit time can be set as the initial value $y_\gamma$. In this way, an attenuation function indicating the aging characteristics of fluorescent light based on the time when the temporary imaging operation is performed is obtained (STEP5).

Then, the exposure time calculation unit 110 calculates the main exposure time capable of obtaining the target density value $Q_f$ of the image captured by the main imaging operation, using the obtained attenuation function (STEP11). When the main exposure time is $T_{m2}$, $T_{m2}$ is obtained by Expression 9 from the relationship with Expression 8:

[Expression 8]

$$Q_f = \int_0^{T_{m1}} \left( -a_1 \cdot t + Q_{m3} \right) dt \, ;$$

and

[Expression 9]

$$T_{m2} = \frac{Q_{m3} - \sqrt{Q_{m3}^2 - 2a_1 Q_f}}{a_1}$$

Here, when the main exposure time $T_{m2}$ is calculated, the value in the root in Expression 9 needs to be positive (conditions 1). When the upper limit of the main exposure time is set, the main exposure time needs to be set to a value equal to or less than the upper limit (conditions 2). When the two conditions are not satisfied, it is necessary to reduce the target density value $Q_f$. If necessary, the target density value $Q_f$ may increase within the range in which the two conditions are satisfied.

Then, the imaging apparatus 10 performs the main imaging operation, using the main exposure time $T_{m2}$ obtained by Expression 9 and the binning number $B_m$ (STEP12). In this way, an image with the target density value $Q_f$ is obtained.

When the designated imaging mode is the third imaging mode, the exposure time calculation unit 110 which has received the information of the imaging conditions selects item No. 8 in the reference table and sets a preset value $T_{m3}$ for detecting reflected light as the main exposure time. Then, the imaging apparatus 10 performs the main imaging operation on the basis of the main exposure time $T_{m3}$ and the binning number $B_m$, without performing the temporary imaging operation (STEP14). In this way, an image with the target density value $Q_f$ is obtained.

When the designated imaging mode is the fourth imaging mode, the exposure time calculation unit 110 which has received the information of the imaging conditions selects item No. 9 in the reference table and sets a preset value $T_{m4}$ for detecting transmitted light as the main exposure time. Then, the imaging apparatus 10 performs the main imaging operation on the basis of the main exposure time $T_{m4}$ and the binning number $B_m$, without performing the temporary imaging operation (STEP15). In this way, an image with the target density value $Q_f$ is obtained.

As described above, the imaging system and the imaging method according to this embodiment change the exposure time calculation method considering the aging characteristics of the light to be detected, according to the imaging mode. Therefore, it is possible to calculate the main exposure time using the exposure time calculation method corresponding to the imaging mode. As a result, in the imaging system and the imaging method which select the imaging mode and capture the image of the object, it is possible to calculate an appropriate main exposure time with high accuracy, using each imaging mode.

In addition, in this embodiment, in the imaging operation using the third and fourth imaging modes, since the temporary imaging operation is not performed, it is possible to reduce the imaging time by a value corresponding to the temporary imaging operation, as compared to the related art.

<Second Embodiment>

In the above-described embodiment, when the imaging mode is the second imaging mode, the aging characteristics of fluorescent light are approximated by the linear function. However, the aging characteristics of a fluorescent material with small amount of discoloration may be approximated by, for example, a constant function. In this case, the exposure time calculation unit 110 selects item No. 7 in the reference table and transmits an instruction to perform the temporary imaging operation once as a response to the control unit 112. When receiving the instruction from the control unit 112, the imaging apparatus 10 performs the temporary imaging operation once. In this case, when the density value obtained by the temporary imaging operation is $Q_{p4}$, the density value $Q_{m4}$ of the main imaging operation per unit time corresponding to the density value $Q_{p4}$ obtained by the temporary imaging operation is obtained by the following Expression 10:

[Expression 10]

$$Q_{m4} = \frac{Q_{p4}}{T_p} \frac{B_m^2}{B_p^2} .$$

When the density value $Q_{m4}$ of the main imaging operation per unit time is calculated, the exposure time calculation unit 110 approximates the aging characteristics of fluorescent light with a constant function $y = y_\gamma$ and calculates a constant $y_\gamma$ of the constant function using the following Expression 11:

[Expression 11]

$$y_\gamma = Q_{m4} .$$

Then, the exposure time calculation unit 110 calculates the main exposure time capable of obtaining the target density value $Q_f$ of the image captured by the main imaging operation, using the obtained constant function. When the main exposure time is $T_{m5}$, $T_{m5}$ is obtained by Expression 13 from the relationship with Expression 12:

[Expression 12]

$$Q_f = Q_{m4} \cdot T_{m5} ; \iota$$

and

[Expression 13]

$$T_{m5} = \frac{Q_f}{Q_{m4}} .$$

Then, the imaging apparatus 10 performs the main imaging operation, using the main exposure time $T_{m5}$ obtained by Expression 13 and the binning number $B_m$. In this way, an image with the target density value $Q_f$ is obtained.
It is preferable that the user adds and changes the items in the reference table of Table 1. For example, it is considered that exponential approximation is changed to linear approximation, the gradient of the linear approximation is changed, the number of temporary imaging operations is changed, the preset value of the main exposure time is changed, or a new item is added. When the user uses the operating unit 104 to change the content of the reference table of Table 1, it is possible to respond to reagents in a wide range. When the amount of illumination light is changed due to the deterioration of the light source, it is possible to approximate the aging characteristics of the illumination light with an attenuation function or a constant function considering the deterioration of the light source.
In the above-described embodiment, the aging characteristics of the chemiluminescent light are approximated by the exponential function. However, when discoloration is small, the aging characteristics of the chemiluminescent light may be approximated by a linear function.

**Claims**

1. An imaging system comprising:

   imaging means for capturing an image of an object;
   input receiving means for receiving an input of a mode for capturing the image of the object; and
   calculation means for calculating an exposure time that is required for a main imaging operation with an exposure time calculation method for calculating the exposure time, which calculation method is changed according to the imaging mode input to the input receiving means,
   wherein the imaging means captures the image of the object at the exposure time calculated by the calculation means.

2. The imaging system according to claim 1,
   wherein, when the imaging mode is a first imaging mode of detecting chemiluminescent light, the calculation means calculates the exposure time using an integral of a first attenuation function which is calculated in consideration of a temporary imaging result of the imaging means, and
   when the imaging mode is a second imaging mode of detecting fluorescent light, the calculation means calculates the exposure time using the integral of a second attenuation function, which is calculated in consideration of the temporary imaging result of the imaging means and has a lower attenuation rate than the first attenuation function, or a constant function.

3. The imaging system according to claim 2,
   wherein the calculation means approximates aging characteristics of the chemiluminescent light with the first attenuation function.

4. The imaging system according to claim 2 or 3,
   wherein the calculation means approximates the aging characteristics of the fluorescent light with the second attenuation function.

5. The imaging system according to any one of claims 1 to 4,
   wherein the input receiving means receives an input of the type of reagent used for imaging, and
   the calculation means changes the exposure time calculation method according to at least the type of reagent.

6. The imaging system according to any one of claims 1 to 5, further comprising:

   display means for displaying the captured image,
   wherein the input receiving means receives an input of an area of interest in a temporarily captured image displayed on the display means, and
   the calculation means calculates the exposure time at which a density value of the area of interest input to the input receiving means is a target density value.

7. The imaging system according to any one of claims 1 to 6,
   wherein, when the imaging mode is a third imaging mode of detecting light reflected from the object or a fourth imaging mode of detecting light transmitted through the object, the calculation means sets a predetermined value to the exposure time.

8. The imaging system according to any one of claims 1 to 7,
   wherein the input receiving means receives an input of information about the exposure time calculation method, and
   the calculation means adds a new element to a reference table which refers to the exposure time calculation method or changes an preexisting element, based upon the information input to the input receiving means.

9. An imaging method comprising:

   calculating an exposure time that is required for a main imaging operation with an exposure time calculation method for calculating the exposure time, which calculation method is changed according to a mode for capturing an image of an object; and
   capturing the image of the object at the calculated exposure time.

**10.** The imaging method according to claim 9,
wherein, when the imaging mode is a first imaging mode of detecting chemiluminescent light, a temporary imaging operation is performed and the exposure time is calculated using the integral of a first attenuation function which is calculated in consideration of a result of the temporary imaging operation, and
when the imaging mode is a second imaging mode of detecting fluorescent light, the temporary imaging operation is performed and the exposure time is calculated using the integral of a second attenuation function, which is calculated in consideration of the result of the temporary imaging operation and has a lower attenuation rate than the first attenuation function, or a constant function.

**11.** The imaging method according to claim 10,
wherein aging characteristics of the chemiluminescent light are approximated by the first attenuation function.

**12.** The imaging method according to claim 10 or 11,
wherein the aging characteristics of the fluorescent light are approximated by the second attenuation function.

**13.** The imaging method according to any one of claims 9 to 12,
wherein the exposure time calculation method is changed according to at least the type of reagent used for imaging.

**14.** The imaging method according to any one of claims 9 to 13,
wherein an area of interest is set in a temporarily captured image, and
the exposure time at which a density value of the area of interest is a target density value is calculated.

**15.** The imaging method according to any one of claims 9 to 14,
wherein, when the imaging mode is a third imaging mode of detecting light reflected from the object or a fourth imaging mode of detecting light transmitted through the object, a predetermined value is set to the exposure time.

FIG. 1

FIG. 2

FIG. 3

FIG. 4A

$$y = y_\alpha \cdot e^{-kt}$$

INTENSITY OF EMITTED LIGHT

$y_0$

tx

IMAGING TIME

FIG. 4B

$$y = y_\beta$$

INTENSITY OF EMITTED LIGHT

$y_0$

tx

IMAGING TIME

# FIG. 5

START

INPUT IMAGING CONDITIONS (FOR EXAMPLE, IMAGING MODE AND REAGENT NAME) — STEP1

IS DETECTION TARGET CHEMILUMINESCENT LIGHT? — STEP2 → NO

PERFORM FIRST TEMPORARY IMAGING OPERATION — STEP3

PERFORM SECOND TEMPORARY IMAGING OPERATION AFTER PREDETERMINED TIME Tg — STEP4

CALCULATE DISCOLORATION CHARACTERISTICS OF CHEMILUMINESCENT LIGHT FROM RESULT OF TEMPORARY IMAGING OPERATION — STEP5

IS DETECTION TARGET FLUORESCENT LIGHT? — STEP8 → NO

PERFORM TEMPORARY IMAGING OPERATION — STEP9

CALCULATE ATTENUATION FUNCTION OF FLUORESCENT LIGHT FROM RESULT OF TEMPORARY IMAGING OPERATION — STEP10

IS DETECTION TARGET REFLECTED LIGHT? — STEP13 → NO

PERFORM MAIN IMAGING OPERATION AT PREDETERMINED MAIN EXPOSURE TIME FOR TRANSMITTED LIGHT — STEP15

(CONT.)

EP 2 919 455 A1

(FIG. 5 Continued)

STEP6
CALCULATE NECESSARY MAIN EXPOSURE TIME FROM ATTENUATION FUNCTION AND TARGET DENSITY VALUE

STEP7
PERFORM MAIN IMAGING OPERATION AT CALCULATED MAIN EXPOSURE TIME

STEP11
CALCULATE NECESSARY MAIN EXPOSURE TIME FROM ATTENUATION FUNCTION AND TARGET DENSITY VALUE

STEP12
PERFORM MAIN IMAGING OPERATION AT CALCULATED MAIN EXPOSURE TIME

STEP14
PERFORM MAIN IMAGING OPERATION AT PREDETERMINED MAIN EXPOSURE TIME FOR REFLECTED LIGHT

END

Europäisches
Patentamt

European
Patent Office

Office européen
des brevets

# EUROPEAN SEARCH REPORT

Application Number

EP 15 15 5344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 6 791 618 B1 (SHIMIZU HITOSHI [JP])<br>14 September 2004 (2004-09-14)<br>* abstract; figures 1, 2, 4 *<br>* column 1, line 66 - column 2, line 31 *<br>* column 3, line 10 - line 13 *<br>* column 7, line 45 - column 9, line 32 *<br>* column 11, line 5 - line 12 *<br>* column 12, line 12 - line 19; claims 1, 2, 8 * | 1,6-9,<br>14,15<br>2-5,<br>10-13 | INV.<br>H04N5/232<br>H04N5/235 |
| Y | ----- <br>US 2013/070110 A1 (YAMAGUCHI AKIRA [JP])<br>21 March 2013 (2013-03-21)<br>* abstract; figures 5, 7 *<br>* paragraphs [0043], [0054], [0071],<br>[0072], [0091] * | 2-5,<br>10-13 | |
| A | -----<br>US 5 682 567 A (SPRUCK BERND [DE] ET AL)<br>28 October 1997 (1997-10-28)<br>* column 1, line 10 - column 2, line 26;<br>figures 3, 4 *<br>* column 5, line 35 - column 6, line 23 *<br>----- | 2-5,<br>10-13 | TECHNICAL FIELDS<br>SEARCHED (IPC)<br><br>H04N |

The present search report has been drawn up for all claims

| Place of search | Date of completion of the search | Examiner |
|---|---|---|
| Munich | 30 July 2015 | Oelsner, Martin |

**ANNEX TO THE EUROPEAN SEARCH REPORT
ON EUROPEAN PATENT APPLICATION NO.**

EP 15 15 5344

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2015

| Patent document cited in search report | | Publication date | Patent family member(s) | | Publication date |
|---|---|---|---|---|---|
| US 6791618 | B1 | 14-09-2004 | JP<br>JP<br>US | 3678397 B2<br>2000180361 A<br>6791618 B1 | 03-08-2005<br>30-06-2000<br>14-09-2004 |
| US 2013070110 | A1 | 21-03-2013 | JP<br>JP<br>US | 5496976 B2<br>2013068725 A<br>2013070110 A1 | 21-05-2014<br>18-04-2013<br>21-03-2013 |
| US 5682567 | A | 28-10-1997 | DE<br>JP<br>US | 19532897 A1<br>H08110542 A<br>5682567 A | 28-03-1996<br>30-04-1996<br>28-10-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3678397 B

- JP 2013068725 A